# EUROPÄISCHE PATENTSCHRIFT

(11) **EP 2 079 154 B1**
(45) Veröffentlichungstag und Bekanntmachung des Hinweises auf die Patenterteilung: **17.04.2013**
(21) Anmeldenummer: 08021596.5
(22) Anmeldetag: 12.12.2008
(51) Int. Cl.: H02K 35/02

(54) **Energiewandler**
Energy converter
Convertisseur d'énergie

(30) Priorität: 09.01.2008 DE 102008003595
(43) Veröffentlichungstag der Anmeldung: 15.07.2009
(73) Patentinhaber: Panasonic Electric Works Europe AG, 83607 Holzkirchen (DE)
(72) Erfinder: Herbsleb, Hagen, Dipl- Ing. (FH), 83646 Bad Tölz (DE); Oberndorfer, Johannes, Dipl.-Ing. (FH), 83714 Miesbach (DE); Pohl, Peter-Jürgen, Dipl.-Ing. (FH), 85276 Pfaffenhofen (DE)
(74) Vertreter: Beckord, Klaus

(56) Entgegenhaltungen:
- DE-B4- 10 315 765
- FR-A1- 2 893 780

## Beschreibung

Die Erfindung betrifft einen elektromechanischen Energiewandler zur Umwandlung von kinetischer Energie in elektrische Energie mit einem feststehenden Joch, welches zumindest zwei Enden mit jeweils einer ersten Joch-Polfläche und einer zweiten Joch-Polfläche aufweist und in einem Bereich zwischen den Enden von zumindest einer Induktionsspule umwickelt ist, und mit einem permanentmagnetischen Anker, welcher an zwei Enden jeweils eine erste Anker-Polfläche und eine zweite Anker-Polfläche aufweist, so dass sich an jedem der Enden des Jochs jeweils eine erste Anker-Polfläche und eine erste Joch-Polfläche sowie eine zweite Anker-Polfläche und eine zweite Joch-Polfläche gegenüberliegen. Der Anker ist so um eine Drehachse am Joch drehbar gelagert, dass in einer ersten Drehstellung des Ankers die ersten Anker-Polflächen jeweils unter Bildung eines Anschlags für die erste Drehstellung an den ersten Joch-Polflächen anliegen. Der elektromechanische Energiewandler weist außerdem ein Betätigungselement zur Bewegung des Ankers durch eine externe mechanische Kraft aus der ersten Drehstellung in eine zweite Drehstellung auf, wobei in der Induktionsspule elektrische Energie induziert wird.

Ein Energiewandler wird beispielsweise in der DE 103 15 765 B4 (= WO 2004/093299 A1) beschrieben, wobei diese Schrift auch einen relativ guten Überblick über den Stand der Technik bezüglich derartiger Energiewandler gibt. Der dort beschriebene elektromagnetische Energiewandler weist einen Permanentmagneten und ein dazu bewegliches Element auf, das von einer elektrischen Spule umschlossen ist. In eine erste Ruhelage des beweglichen Elements ist ein magnetischer Fluss durch das bewegliche Element geschlossen. Bei einer Bewegung des beweglichen Elements in eine zweite Ruhelage wird eine Umkehrung des magnetischen Flusses im magnetischen Element bewirkt. Der Permanentmagnet ist so ausgebildet, dass sich dessen magnetische Nord- und Südpole jeweils an den Enden des beweglichen Elements gegenüber befinden und dabei Anschläge für das bewegliche Element bilden. Damit das bewegliche Element innerhalb der Spule gekippt werden kann, befindet sich zwischen Spule und beweglichem Element ein Freiraum. Bei dieser Konstruktion werden daher nur relativ geringe Spannungen und Leistungen erreicht.

In der FR 2 893 780 A1 wird zudem ein Energiewandler der eingangs genannten Art beschrieben, bei dem ein von einer Spule umwickeltes Joch feststeht und relativ dazu ein Anker bewegt wird. Die Bewegung des Ankers erfolgt durch Druck auf ein speziell hierzu mechanisch aufwändig ausgebildetes Gehäuse. Die ersten und zweiten Anker-Polflächen sowie die ersten und zweiten Joch-Polflächen sind jeweils im Wesentlichen gleich ausgebildet. Bei einer Bewegung des Ankers von der ersten in die zweite Drehstellung wird auch hier die Magnetflussrichtung durch das Joch umgekehrt, sodass in jeder der beiden Endlagen magnetische Haltekräfte auf den Anker wirken. Der Energiewandler ist somit von seiner grundsätzlichen Konstruktion her bistabil und es sind zusätzliche konstruktive Maßnahmen in Form von Rückstellelementen oder eine weitere Betätigung erforderlich, um den Anker in die Ausgangslage zurückzubewegen.

Es ist eine Aufgabe der vorliegenden Erfindung, einen effektiver und einfacher zu betätigenden Energiewandler zu schaffen. Diese Aufgabe wird durch einen Energiewandler gemäß Patentanspruch 1 gelöst.

Der erfindungsgemäße Energiewandler weist wie eingangs beschrieben ein feststehendes Joch und einen am Joch drehbar gelagerten permanentmagnetischen Anker auf, das heißt einen Anker mit zumindest einem Permanentmagneten und gegebenenfalls geeigneten Polschuhen. Mittels eines Betätigungselements kann der Anker durch eine externe Kraft aus der ersten Drehstellung in eine zweite Drehstellung bewegt werden, wodurch in der Induktionsspule elektrische Energie induziert wird. Unter einer externen Kraft ist dabei jede mechanische Kraft zu verstehen, die nicht aus dem Energiewandler selbst kommt. Beispielsweise kann es sich um einen kinetischen Impuls handeln, den ein Benutzer beim Drücken einer Taste oder eines Schalters auf das Betätigungselement gibt. Entsprechend wird dann in der Induktionsspule ein Strom- bzw. Spannungsimpuls induziert.

Dabei sind bei einer erfindungsgemäßen Variante die zwei an den Enden des Ankers diagonal gegenüberliegenden zweiten Anker-Polflächen kleiner ausgebildet als die ersten Anker-Polflächen und/oder zwei an den beiden Enden des Jochs diagonal gegenüberliegende zweite Joch-Polflächen sind kleiner ausgebildet als die ersten Joch-Polflächen. Beispielsweise können bei einem noch später näher erläuterten Anker mit einem H-förmigen Querschnitt zwei der diagonal gegenüberliegenden H-Schenkel kürzer sein. Durch die verringerten Querschnittflächen der zweiten Joch-Polflächen und/oder zweiten Anker-Polflächen gegenüber den ersten Joch-Polflächen und/oder ersten Anker-Polflächen wird erreicht, dass der magnetische Widerstand in der ersten Drehstellung kleiner ist als in der zweiten Drehstellung.

Alternativ oder zusätzlich können erfindungsgemäß zur Erhöhung des magnetischen Widerstands in der zweiten Drehstellung gegenüber der ersten Drehstellung zwischen den zweiten Anker-Polflächen und den diesen zugeordneten zweiten Joch-Polflächen jeweils Trennelemente, z. B. Trennplättchen, aus nichtmagnetischem Stoff bzw. Material, angeordnet sein. Als Materialien hierfür bietet sich Edelstahl, beispielsweise Nirosta, an. Eine Alternative zu solchen Trennplättchen ist, bewusst durch geeignete konstruktive Maßnahmen wie einen oder mehrere zusätzliche Anschläge oder ein Versetzen der Drehachse dafür zu sorgen, dass zwischen der zweiten Anker-Polfläche und der zweiten Joch-Polfläche zumindest teilweise immer ein Luftspalt verbleibt, da Luft ja auch ein nichtmagnetischer Stoff ist, der den magnetischen Widerstand erhöht.

Der Vorteil des so konstruierten Energiewandlers besteht zum einen darin, dass die Induktionsspule möglichst eng auf das feststehende Joch, allenfalls unter Belassung eines möglichst geringen magnetischen Luftspalts, umwickelt werden kann. Da zudem in der ersten Drehstellung des Ankers die Anker-Polflächen jeweils unter Bildung des Anschlags an den ersten Joch-Polflächen anliegen, müssen die Polflächen zur Bewegung des Ankers aus der ersten Drehstellung senkrecht zu den zwischen den Polflächen verlaufenden Magnetfeldlinien bewegt werden. Durch die Ausgestaltungen der zweiten Anker-Polflächen und/oder Joch-Polflächen mit einer verringerten Querschnittsfläche und/oder durch die Verwendung von Trennelementen kann der Energiewandler vorteilhafterweise so ausgebildet sein, dass die Magnetflussrichtung durch das Joch bei einer Verstellung des Ankers von der ersten Drehstellung in die zweite Drehstellung, in der die zweiten Anker-Polflächen (gegebenenfalls unter Zwischenlage der Trennelemente) in Anschlag vor den zweiten Joch-Polflächen liegen, beibehalten wird oder der Magnetfluss in der zweiten Drehstellung Null ist. Das heißt, es findet keine Magnetfeldumkehr statt, sodass keine magnetischen Haltekräfte auf den Anker in der zweiten Drehstellung wirken. Sofern die Magnetflussrichtung beibehalten wird, wird der Anker, sobald auf das Betätigungselement keine externe Kraft mehr ausgeübt wird, automatisch von der zweiten Drehstellung in die erste Drehstellung zurückgestellt. Der Energiewandler kann so auch ohne eine Rückstellfeder monostabil ausgebildet sein.

Durch diese Konstruktion arbeitet der Energiewandler insgesamt - weitgehend unabhängig von der Betätigungsgeschwindigkeit - mit einem hohen Wirkungsgrad, so dass erheblich höhere Spannungspulse und Leistungen erreichbar sind und die Betätigung ist besonders einfach und effektiv gestaltet.

Die abhängigen Ansprüche sowie die weitere Beschreibung enthalten jeweils besonders vorteilhafte Ausgestaltung und Weiterbildungen der Erfindung.

Besonders bevorzugt weist der Anker an seinen Enden jeweils zueinander weisende erste und zweite Anker-Polflächen auf, und das Joch und der Anker sind so ausgebildet und zueinander angeordnet, dass sich die Enden des Jochs an den Enden des Ankers jeweils zwischen der ersten und der zweiten Anker-Polfläche befinden. Alternativ kann auch das Joch an seinen Enden jeweils zueinander weisende erste und zweite Joch-Polflächen aufweisen, und das Joch und der Anker sind so ausgebildet und zueinander angeordnet, dass sich die Enden des Ankers an den Enden des Jochs jeweils zwischen der ersten und der zweiten Joch-Polfläche befinden. Das heißt, in der ersten Variante dieses Ausführungsbeispiels ist der Anker an den Enden jeweils gabelförmig ausgebildet und weist auf den Innenseiten der beiden "Gabelzinken" jeweils die Anker-Polflächen auf, und die Enden des Jochs greifen zwischen die Gabelzinken. Bei der zweiten Variante ist es genau umgekehrt; das Joch weist gabelförmige Enden auf, wobei die Joch-Polflächen an den Innenseiten dieser "Gabelzinken" sind und die Ankerenden jeweils zwischen die Zinken greifen. Ein Vorteil beider Varianten kann sein, dass durch die jeweiligen außen liegenden Polflächen Anschläge in den beiden Drehstellungen des Ankers gebildet werden.

Vorzugsweise weist das Joch in einer Ebene parallel zur Drehachse und parallel zu einer Längsachse der Induktionsspule einen U-förmigen Querschnitt auf. Dabei ist die Induktionsspule vorzugsweise auf den Querbalken des U-Querschnitts gewickelt und die beiden U-Schenkel bilden die freien Enden des Jochs, welche jeweils die Joch-Polflächen aufweisen. Somit steht auch bevorzugt die Drehachse senkrecht zur Wickelachse bzw. Längsachsen der Induktionsspule, d. h. die Längsachsen des Ankers und des mittleren, den U-Balken bildenden Teils des Jochs liegen in parallelen Ebenen. Zur Bildung der Drehachse kann das Joch beispielsweise zwischen den U-Schenkeln einen sich parallel zu den U-Schenkeln erstreckenden Stift aufweisen. Der Anker weist dann eine entsprechende Bohrung bzw. ein durchgehendes Loch auf, durch welche der Stift hindurchragt, sodass der Anker auf dem Stift um die Drehachse drehbar ist.

Senkrecht zu einer Längsachse der Induktionsspule ist das Joch dagegen im Querschnitt vorzugsweise im Wesentlichen kreisförmig, d.h. kreisrund oder leicht ellipsenförmig, oder besonders bevorzugt zumindest annähernd quadratisch ausgebildet. Diese Formen haben den Vorteil, dass die Induktionsspule sich gut mit einer schnell laufenden Wickelmaschine dicht auf das Joch wickeln lässt.

Besonders bevorzugt ist das Joch im Querschnitt senkrecht zu einer Längsachse der Induktionsspule im Wesentlichen viereckig, vorzugsweise rechteckig, ausgebildet und einem Bereich der Induktionsspule nur an zwei gegenüberliegenden ersten Seiten mit einer Mantelschicht bedeckt, welche an diesen Seiten eine Isolationsschicht zwischen dem Spulendraht und dem Joch bildet. An den beiden anderen gegenüberliegenden zweiten Seiten des Jochs verbleibt dabei zwischen der Joch-Wandfläche und der Induktionsspule nur ein nicht mit Material aufgefüllter Luftspalt bzw. Hohlraum als Isolierung. Hierzu ragt die Mantelschicht, welche die beiden ersten Seiten bedeckt, jeweils an den Kanten zu den beiden angrenzenden zweiten Seiten ein kleines Stück über die Kante hinaus, wodurch an den beiden Kanten der zweiten Seiten jeweils ein wulstartiger Überstand gebildet wird, welcher als Anlage für die Wicklung dient. Bei fester Umwicklung des Jochs verbleibt dann automatisch an den zweiten Seiten der Luftspalt, welcher vorzugsweise eine maximale Dicke von 0,1 mm aufweist. Durch eine solche Konstruktion kann der Spulendraht bei ausreichender Isolierung zumindest an zwei Seiten des Jochs sehr nahe am Joch entlang geführt sein, was die Effizienz des Energiewandlers erheblich steigert.

Insbesondere bei der zuvor beschriebenen Ausbildung des Jochs ist der Anker bevorzugt so ausgebildet, dass er in einer Ebene senkrecht zur Drehachse einen H-förmigen Querschnitt aufweist. Die H-Schenkel dieses H-Ankers schließen dann jeweils die freien U-Schenkel des Jochs zwischen sich ein, sodass sich die oben erläuterte Ausführungsform ergibt, bei der der Anker an jedem seiner beiden Enden jeweils zwei zueinander weisende erste und zweite Anker-Polflächen aufweist, die das Jochende zwischen sich einschließen, wobei sich jeweils eine erste Anker-Polfläche und eine erste Joch-Polfläche sowie eine zweite Anker-Polfläche und eine zweite Joch-Polfläche gegenüberliegen.

Die Joch-Polflächen und/oder die Anker-Polflächen können jeweils bezüglich der Lage ihrer Oberflächen so ausgebildet sein, dass die in den Drehstellungen jeweils voreinander liegenden Polflächen planparallel aufeinanderliegen oder in einem genau definierten, optimierten Winkel zueinander stehen. Die ersten Joch-Polflächen und/oder Anker-Polflächen können dabei auch bezüglich der Lage der Oberflächen anders ausgebildet sein als die zweiten Joch-Polflächen und/oder Anker-Polflächen, so dass in der zweiten Drehstellung zwischen den zweiten Joch-Polflächen und Anker-Polflächen definierte Luftspalten als Trennelemente vorliegen bzw. größere Luftspalte als zwischen den ersten Joch-Polflächen und Anker-Polflächen.

Als Material für das Joch und die Eisenteile des Ankers wird ein besonders gut magnetisch leitendes Material, beispielsweise Weicheisen, verwendet. Der Anker kann aus verschiedenen Materialien bestehen. Vorzugsweise hat er einen permanentmagnetischen Kern aus Ferrit, z.B. Bariumoxid-Ferrit, aus Samarium-Kobalt, Aluminium-Nickel-Kobalt oder Neodym-Eisen-Bor und gegebenenfalls weitere Teile aus Weicheisen, die die Polschuhe bzw. Anker-Polflächen bilden.

Sofern dies in einem konkreten Einsatzfall gewünscht wird, können auch zwischen den ersten Anker-Polflächen und den ersten Joch-Polflächen Trennelemente bzw. Trennplättchen angeordnet sein, um auch in der ersten Drehstellung den magnetischen Widerstand etwas zu erhöhen. Die Trennelemente bilden dann einen Teil der Anker-Polflächen oder Joch-Polflächen und somit den Anschlag für die erste Drehstellung.

Wie oben erläutert kann auf die erfindungsgemäße Weise auch ohne Rückstellfeder ein monostabiler Energiewandler realisiert werden. Sofern dies gewünscht wird, kann aber auch eine zusätzliche Rückstellfeder verwendet werden, um den Anker von der zweiten Drehstellung in die erste Drehstellung zurückzustellen. Dies ist z. B. dann sinnvoll, wenn das Magnetfeld so ausgebildet ist, dass beim Umschalten von der ersten in die zweite Drehstellung ein Totpunkt-Effekt erreicht wird, bei dem der Anker ab einem bestimmten Abstand der ersten Anker-Polflächen von den ersten Joch-Polflächen mit reduzierter Kraft, nämlich nicht mehr gegen die Anziehungskraft des Magneten zwischen den ersten Polflächen, in die zweite Drehstellung bewegt werden kann.

Das Betätigungselement kann, wie bereits eingangs beschrieben, als manuell bedienbare Taste oder Schalter ausgebildet sein oder es ist alternativ mit einer manuell bedienbaren Taste oder Schalter gekoppelt. Der Betätigungsweg des Betätigungselements zum Schalten des Ankers von der ersten in die zweite Drehstellung liegt vorzugsweise unter 2 mm, besonders bevorzugt bei max. 1,5 mm. In bestimmten Anwendungsfällen kann das Betätigungselement aber auch zur automatischen Betätigung mit einem Aktor gekoppelt sein. Beispielsweise ist eine Kopplung mit einem Relais oder einem motorischen Antrieb möglich. Auf diese Weise ist über eine mechanische Kopplung eine elektrische Entkopplung eines beliebigen Aktionselements und eines Reaktionselements möglich. Das Betätigungselement kann auch mit einer manuell bedienbaren Taste oder einem Schalter für eine manuelle Betätigung und parallel dazu für eine automatische Betätigung mit einem Aktor gekoppelt sein.

Die Erfindung wird im Folgenden unter Hinweis auf die beigefügten Figuren anhand von Ausführungsbeispielen noch einmal näher erläutert.

Hieraus ergeben sich noch weitere Einzelheiten und Vorteile der Erfindung. Es zeigen:
- Figur 1: eine perspektivische Darstellung eines Ausführungsbeispiels eines erfindungsgemäßen Energiewandlers von oben mit geöffnetem Gehäuse in einer ersten Drehstellung,
- Figur 2: eine Darstellung des Energiewandlers gemäß Figur 1 in einer zweiten Drehstellung,
- Figur 3: eine perspektivische Darstellung des Jochs und des Ankers aus dem Energiewandler gemäß den Figuren 1 und 2,
- Figur 4: einen Querschnitt durch den Anker und das Joch mit der Induktionsspule aus dem Energiewandler gemäß den Figuren 1 und 2,
- Figur 5: einen Längsschnitt durch das Joch mit der Induktionsspule des Energiewandlers gemäß den Figuren 1 und 2.

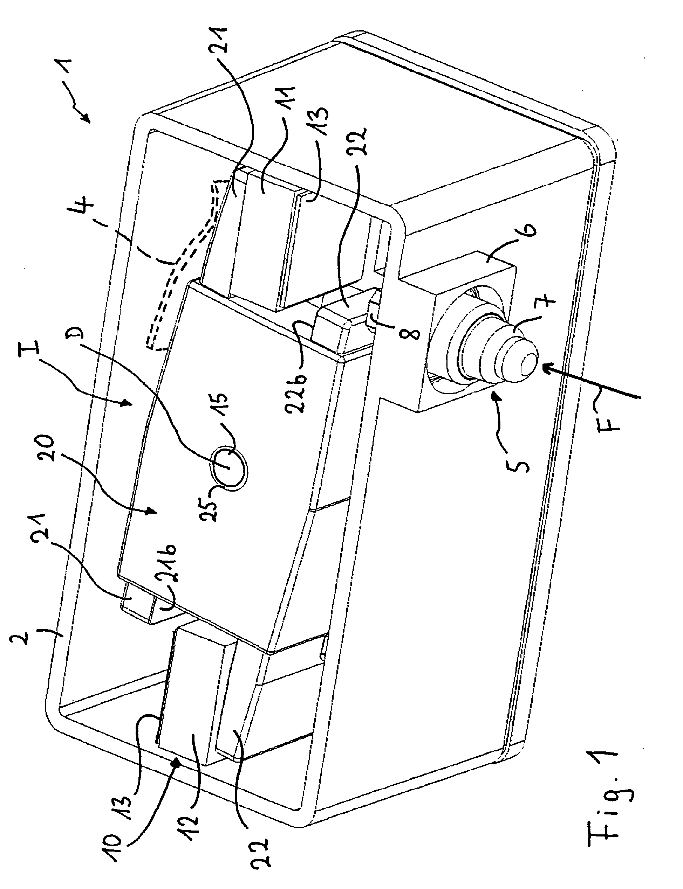

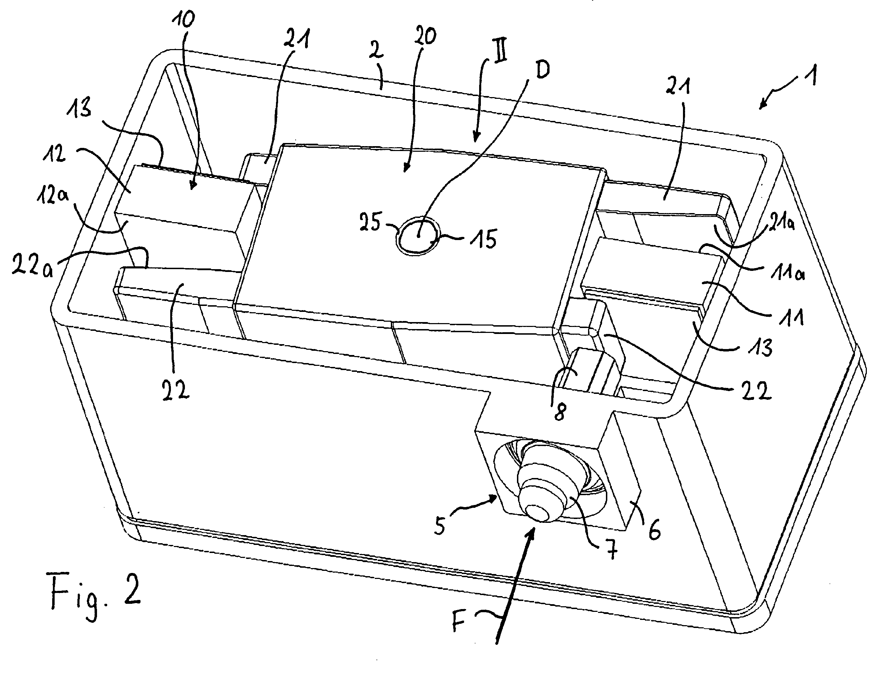

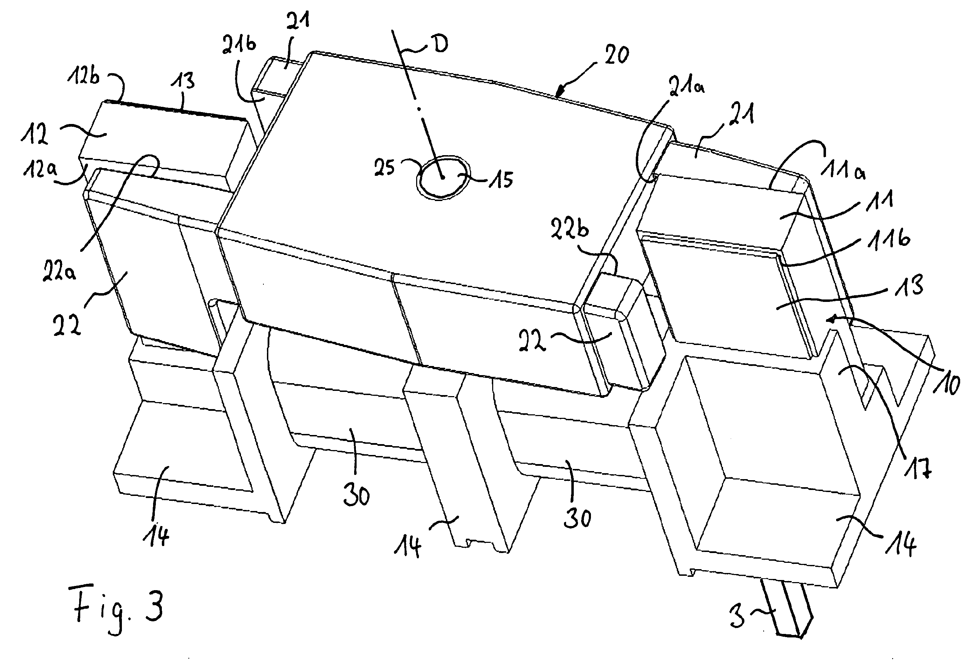

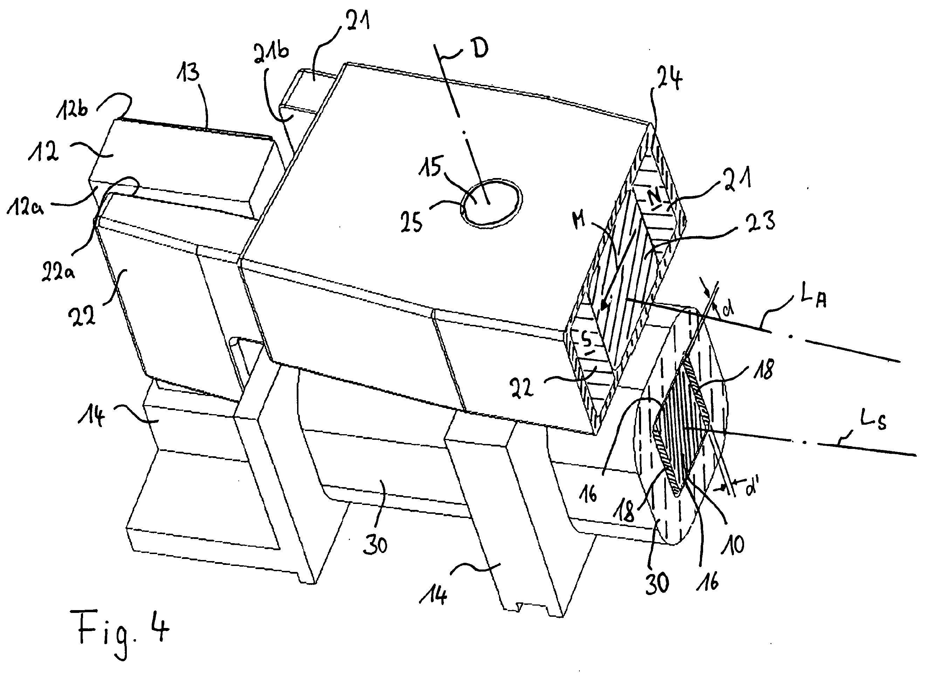

Der im Folgenden anhand der Figuren beschriebene Energiewandler weist als Hauptkomponenten ein in einem Induktionsspulenkörper 14 gehaltenes Joch 10 und einen daran um eine Drehachse D schwenkbar gelagerten Anker 20 auf, welche in einem Gehäuse 2 angeordnet sind. Das Joch 10 und der Anker 20 sind besonders gut in den Figuren 3 und 4 zu erkennen und die Lage dieser Teile innerhalb des Gehäuses 2 in den Figuren 1 und 2.

Am Gehäuse 2 befindet sich ein Betätigungselement 5 in Form einer Taste, mit der der Anker 20 durch eine externe Kraft F, indem beispielsweise ein Benutzer auf einen Stößel 8 der Taste 5 drückt, so dass der Stößel 8 gegen den Anker 20 gedrückt wird, von einer ersten Drehstellung I (Figur 1) in eine zweite Drehstellung II (Figur 2) gedrückt werden kann. Der Betätigungsweg des Stößels 8 liegt hier bei 1,5 mm.

Hierzu befindet sich an einem Durchbruch im Gehäuse 2 eine Stößelführung 6, in der der Stößel 8 längsverschiebbar gelagert ist. Der Stößel 8 ist außenseitig durch eine endseitig geschlossene, balgartige Gummimanschette 7, welche den Stößel stirnseitig einschließt, gegenüber dem Gehäuse 2 bzw. der Stößelführung 6 abgedichtet.

Im Gehäuse 2 kann auch eine Rückstellfeder 4 (in Figur 1 gestrichelt dargestellt) angeordnet sein, hier in Form einer an der Längsseite des Gehäuse 2 angeordneten Blattfeder, welche bei Nachlassen der äußeren Kraft F den Anker 20 wieder von der zweiten Drehstellung II in die erste Drehstellung I zurückdrückt. Diese Feder 4 ist optional, das heißt, es kann bei entsprechender Ausgestaltung des Ankers 20 und des Jochs 10, insbesondere deren Polflächen, dafür gesorgt werden, dass der Anker 20 von selbst wieder in die erste Drehstellung I zurückklappt, sobald keine äußere Kraft F mehr am Taster 5 anliegt.

Sowohl der Anker 20 als auch das Joch 10 sind länglich ausgebildet und die Längsachsen L_{S}, L_{A} beider Elemente liegen im Wesentlichen, abgesehen von der Drehstellung des Ankers 20 relativ zum Joch 10, parallel zueinander (siehe Figur 4).

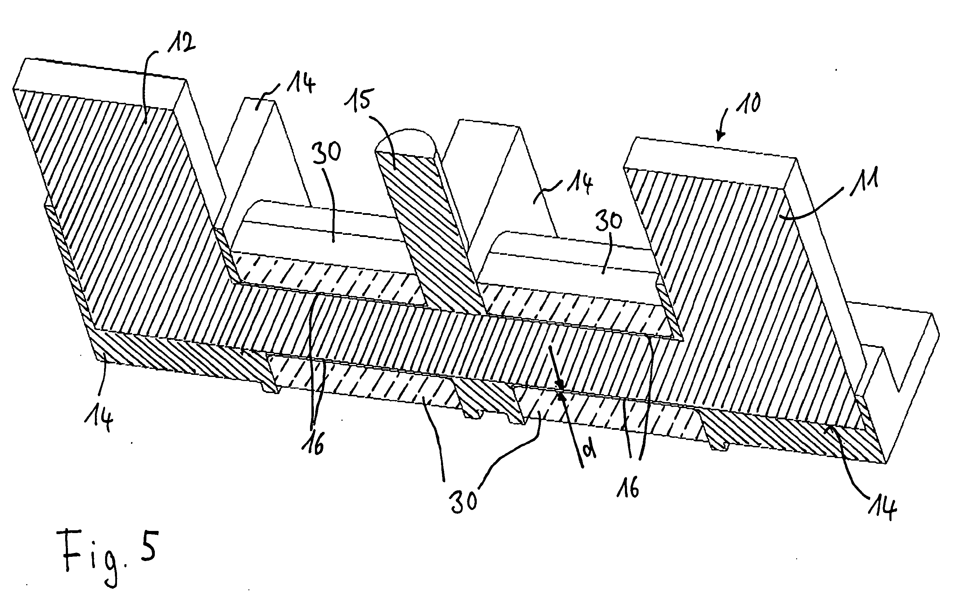

Vom Grundaufbau her ist das Joch 10 U-förmig ausgebildet. Dies ist besonders gut in dem Längsschnitt durch das Joch 10 in Figur 5 zu sehen. Die beiden U-Schenkel 11, 12 bilden dabei die Enden des Jochs 10. Die Längsachse des Jochs 10 bzw. die Längsachse des U-Balkens ist zugleich auch die Längsachse L_{S} der um den mittleren U-Balken zwischen den beiden U-Schenkeln 11, 12 aufgewickelten Induktionsspule 30.

Im Querschnitt senkrecht zur Spulenlängsachse L_{S} ist das Joch 10 im Bereich des U-Querbalkens ungefähr quadratisch, was in Figur 4 zu sehen ist. Diese Konstruktion trägt dazu bei, dass eine möglichst schnelle Umwicklung des mittleren Bereichs des Jochs 10 mit dem Spulendraht mit einer schnell laufenden Wickelmaschine erfolgen kann und dabei eine möglichst enge und dichte Wicklung erreicht wird, und so die Effizienz des Energiewandlers optimiert wird.

In der dargestellten bevorzugten Ausführungsform ist das aus Weicheisen bestehende Joch 10 in einem Induktionsspulenkörper 14 aus Spritzguss-Kunststoff eingespritzt. Dieser Induktionsspulenkörper 14 schließt das Joch 11 jeweils im Bereich der Übergänge vom U-Balken in die U-Schenkel ringsum ein und nur an den Enden ragen die U-Schenkel 11, 12 des Jochs 10 aus dem Induktionsspulenkörper 14 heraus. In der Mitte zwischen den U-Schenkeln 11, 12 des Jochs 10 ist an den Induktionsspulenkörper 14 ein Stift 15 angespritzt, welcher sich parallel zu den U-Schenkeln 11, 12 erstreckt und welcher die Drehachse D für den Anker 20 bildet. In den beiden Abschnitten des U-Balkens zwischen den U-Schenkeln 11, 12 und dem Mittelbereich, in welchem der Stift 15 angespritzt ist, ist das Joch 10 jeweils nur an zwei Seiten, hier den parallel zu den U-Schenkeln 11, 12 verlaufenden Seiten, von einer als Isolierung dienenden Kunststoffschicht 18 des Induktionsspulenkörpers 14 abgedeckt. Vorzugsweise liegt die Dicke d' des Kunststoffmantels 18 unterhalb von 1 mm, besonders bevorzugt unterhalb von 0,5 mm und ganz besonders bevorzugt bei maximal 0,3 mm, um die Induktionsspule 30 möglichst eng auf den Weicheisenkern des Jochs 10 zu wickeln (siehe Figur 4). Diese Kunststoffschicht 18 ragt an den Kanten geringfügig über die Seiten hinaus und bildet so eine längs der Kanten verlaufende Wulst. Bei einer festen Umwicklung des Induktionsspulenkörpers 14 verbleibt so jeweils ein kleiner Luftspalt 16 als Isolierung zwischen den beiden anderen Seitenflächen des Jochs 10 (in Figur 4 der Oberseite und Unterseite) und der Induktionsspule 30. Die Dicke d dieses Luftspalts 16 beträgt vorzugsweise maximal ca. 0,1 mm.

Durch diese Art der Umspritzung des Jochs 10 ist der Induktionsspulenkörper 14 insgesamt stabil und das Joch 10 ist ausreichend gegenüber dem Spulendraht isoliert, so dass es auch bei einem Fehler in der Isolierung des Drahts, der üblicherweise mit Isolierlack versehen ist, nicht zu einem Kurzschluss zwischen Joch 10 und Spule 30 kommen kann. Andererseits kann die Spule 30, insbesondere wegen der Konstruktion mit dem Luftspalt, zur Optimierung der Effizienz so eng wie möglich um das Joch 10 gewickelt werden. Zusätzlich wird der gesamte Aufbau durch die eng um das Joch 10 gewickelte Induktionsspule 30 verstärkt.

Die Enden der Induktionsspule 30 sind jeweils mit Spulenterminals bzw. Abgriffen 3 verbunden, welche nach unten weggeführt sind (siehe Figur 3) und über die die induzierte Spannung abgegriffen werden kann.

Jedes Ende bzw. jeder U-Schenkel 11, 12 des Jochs 10 bildet zwei Joch-Polflächen 11a, 11 b, 12a, 12b. Dabei ist jeweils eine erste Joch-Polfläche 11 a, 12a großflächiger und eine zweite Joch-Polfläche 11 b, 12b kürzer ausgebildet, indem in einem Abschnitt 17 auf der Seite der jeweils zweiten Joch-Polfläche 11b, 12b der Kunststoff des Induktionsspulenkörpers 14 etwas höher gezogen ist. Zudem weisen die zweiten Joch-Polflächen 11 b, 12b jeweils ein Trennplättchen 13 aus nichtmagnetischem Material, beispielsweise Edelstahl, auf. Dadurch wird der magnetische Widerstand der zweiten Joch-Polflächen 11 b, 12b im Gegensatz zu den ersten Joch-Polflächen 11a, 12a vergrößert. Der Induktionsspulenkörper 14 ist dabei so ausgebildet und die Trennplättchen 13 so aufgebracht, dass sich die ersten Joch-Polflächen 11a, 12a und die zweiten Joch-Polflächen 11b, 12b jeweils bezüglich einer durch die Drehachse D verlaufenden Symmetrieachse diagonal gegenüberliegen.

Der Anker 20 des Energiewandlers 1 ist aus mehreren Komponenten aufgebaut. Im Inneren des Ankers 20 befindet sich ein Permanentmagnetkern 23 vorzugsweise aus Samarium-Kobalt, Aluminium-Nickel-Kobalt, Neodym-Eisen-Bor oder einem anderen besonders starken permanentmagnetischen Material. Dieser Permanentmagnetkern 23 ist so magnetisiert, dass seine Magnetfeldlinien senkrecht zur Drehachse D und senkrecht zu einer Längsachse L_{A} des Ankers 20 verlaufen. Die Magnetfeldrichtung M ist in Figur 4 schematisch eingezeichnet. Grundsätzlich kann die Magnetfeldrichtung M aber auch genau umgekehrt sein, da der gesamte Energiewandler 1 bezüglich der Drehachse D symmetrisch aufgebaut ist.

An den beiden Längsseiten des Permanentmagnetkerns 23 erstrecken sich jeweils über den gesamten Permanentmagnetkern 23 und darüber hinaus Polschuhe 21, 22, beispielsweise aus Weicheisen.

Der Permanentmagnetkern 23 ist gemeinsam mit den Polschuhen 21, 22 in einem Vergusskörper 24 aus Kunststoff angeordnet, welcher das gesamte Ensemble fest zusammenhält und so den kompakten Anker 20 bildet, wobei die Polschuhe beidseitig aus dem Vergusskörper 24 herausragen. Durch diesen Aufbau weist der Anker 20 in einer Ebene senkrecht zur Drehachse D einen H-förmigen Querschnitt auf, weshalb ein solcher Anker 20 auch als H-Anker bezeichnet werden kann, wobei hier, wie in den Figuren zu sehen ist, die Schenkel der Polschuhe 21, 22 asymmetrisch ausgebildet sind.

Die Polschuhe 21, 22 des Ankers 20 können (in einer senkrecht zur Drehachse D liegenden Querschnittfläche betrachtet) an den Enden jeweils konisch ausgebildet sein, um einen definierten Winkel zwischen den Joch-Polflächen 11a, 11 b, 12a, 12b und den Anker-Polflächen 21 a, 22b, 22a, 21b in der ersten und zweiten Drehstellung des Ankers 20 zu erreichen.

Der permanentmagnetische Kern 23 kann auch mehrteilig ausgebildet sein. Z. B. kann er unter Belassung eines Freiraums für ein Drehachsenführungsloch 25 zweiteilig ausgebildet sein. In diesem Fall ist das Drehachsenführungsloch 25 in den Vergusskörper 24 vorzugsweise gleich mit passend eingespritzt. Dieses Drehachsenführungsloch 25 ist so ausgebildet, dass es passgenau auf den Stift 15 des Induktionsspulenkörpers 14 passt und der Anker 20 mit möglichst geringer Toleranz frei auf dem Stift 15 drehbar gelagert werden kann, wie dies in den Figuren 1 bis 4 dargestellt ist. Sofern ein durchgehender Permanentmagnetkern verwendet wird, kann in diesen auch eine entsprechende Durchgangsbohrung eingebracht sein.

Wie in den Figuren 1 bis 3 zu sehen ist, ist bei jedem der Polschuhe 21, 22 eines der beiden Enden, mit denen er aus dem Vergusskörper 24 herausragt, im Verhältnis zum jeweils anderen Ende verkürzt, welches dagegen gerade sehr großflächig ausgebildet und so lang ist, dass es im montierten Zustand fast bis an die Außenkante des U-Schenkels 11, 12 des Jochs 10 heranragt. Diese Enden bilden jeweils auf ihrer Innenseite die ersten Anker-Polflächen 21a, 22a, welche den ersten Joch-Polflächen 11a, 12 a gegenüberliegen. Um den magnetischen Widerstand weiter zu verringern, sind die ersten Anker-Polflächen 21 a, 22a sogar noch quer zur Längsachse L_{A} des Ankers 20 vergrößert, indem die Polschuhe an ihren Enden jeweils rechtwinklig nach unten ausgeweitet sind. So wird möglichst viel von der am Joch zur Verfügung stehenden ersten Joch-Polfläche 11a, 12 a genutzt. In einer diagonal durch den Anker 20 parallel zur Drehachse D liegenden Ebene, welche durch die Polschuhbereiche mit den ersten Anker-Polflächen 21 a, 22b verläuft, weist der Anker 20 somit ebenfalls einen U-förmigen Querschnitt auf, wobei die offene Seite des U-Querschnitts des Ankers 20 in Richtung der offenen Seite des U-Querschnitts des Jochs 10 weist.

Die stark verkürzten Enden der beiden Polschuhe 21, 22 bilden die zweiten Anker-Polflächen 21 b, 22b. Dabei liegt die zweite Anker-Polfläche 21 b, die durch das verkürzte Ende des ersten Polschuhs 21 (in Figur 4 den Nordpol N des Ankers 20) gebildet wird, der zweiten Joch-Polfläche 12b des zweiten U-Schenkels gegenüber und die zweite Joch-Polfläche 22b, welche durch den zweiten Polschuh 22 (in Figur 4 den Südpol S des Ankers 20) gebildet wird, liegt der zweiten Joch-Polfläche 11 b des ersten U-Schenkels 11 des Jochs 10 gegenüber. Diese asymmetrische Ausbildung führt dazu, dass in der ersten Drehstellung I sehr große gegenüberliegende erste Joch-Polflächen 11a, 12a und dazugehörige Anker-Polflächen 21 a, 22a zur Verfügung stehen, sodass in der ersten Drehstellung I der magnetische Übergangswiderstand zwischen dem Anker 20 und dem Joch 10 sehr gering ist. Die in der zweiten Drehstellung ll (siehe Figur 2) jeweils aneinander anschlagenden zweiten Joch-Polflächen 11 b, 12b und zweiten Anker-Polflächen 22b, 21 b sind dagegen relativ klein, wobei durch die Trennplättchen 13 aus nichtmagnetischem Material der magnetische Widerstand noch vergrößert wird.

Je nach Wahl des magnetischen Materials und der Trennplättchenmaterialauswahl bzw. -dicke kann so dafür gesorgt werden, dass sich das Magnetfeld M durch das Joch 10 bei einer Verstellung des Ankers von der ersten Drehstellung in die zweite Drehstellung nicht umdreht, sondern allenfalls auf Null zurückgeht. Daher kann, wie bereits eingangs erläutert, grundsätzlich auf eine Rückstellfeder 4 verzichtet werden. Die asymmetrische Ausbildung der jeweils an einem Jochende sich gegenüberliegenden Anker-Polflächen hat im Übrigen den Vorteil, dass ein effektiver Energiewandler mit einem sehr geringen Betätigungsweg realisiert werden kann.

Erste Versuchsreihen mit einem erfindungsgemäß aufgebauten Energiewandler haben gezeigt, dass unabhängig von der Geschwindigkeit, mit der vom Benutzer die Taste gedrückt wird, Spannungen von über 30 Volt erreichbar sind, wobei die Leistung mit steigendem Lastwiderstand, der als Nutzlast an den Spulenterminals angehängt wird, bis zu 1,5 mWs ansteigt. Dabei wird eine Spannung von 25 Volt auch noch bei Lastwiderständen im Bereich von 0,5 bis 3,5 kΩ erreicht. Für diese Testmessungen wurde das in den Ausführungsbeispielen dargestellte Exemplar genutzt. Bei Vergleichsmessungen mit einem Energiewandler, welcher gemäß dem eingangs genannten Ausführungsbeispiel aufgebaut ist, wurden dagegen nur Maximalspannungen von 20 V bei einem sehr geringen Lastwiderstand erreicht und eine maximale Leistung von ca. 0,75 mWs. Dies zeigt, dass durch den erfindungsgemäßen Aufbau eine erheblich bessere Effizienz bei der Umwandlung der Energie erreichbar ist.

Es wird abschließend noch einmal darauf hingewiesen, dass es sich bei dem in den Figuren dargestellten Energiewandler 1 lediglich um ein Ausführungsbeispiel handelt, welches vom Fachmann in vielfacher Hinsicht variiert werden kann, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Energiewandler (1) zur Umwandlung von kinetischer Energie in elektrische Energie mit
- einem feststehenden Joch (10), welches zumindest zwei Enden (11, 12) mit jeweils einer ersten Joch-Polfläche (11a, 12a) und einer zweiten Joch-Polfläche (11b, 12b) aufweist und in einem Bereich zwischen den Enden (11, 12) von zumindest einer Induktionsspule (30) umwickelt ist,
- einem permanentmagnetischen Anker (20), welcher an zwei Enden jeweils eine erste Anker-Polfläche (21 a, 22a) und eine zweite Anker-Polfläche (21b, 22b) aufweist, so dass sich an jedem der Enden (11, 12) des Jochs (10) jeweils eine erste Anker-Polfläche (21 a, 22a) und eine erste Joch-Polfläche (11a, 12a) sowie eine zweite Anker-Polfläche (21 b, 22b) und eine zweite Joch-Polfläche (11 b, 12b) gegenüberliegen,
und welcher um eine Drehachse (D) so am Joch (10) drehbar gelagert ist, dass in einer ersten Drehstellung (I) des Ankers (20) die ersten Anker-Polflächen (21 a, 22a) jeweils unter Bildung eines Anschlags für die erste Drehstellung (I) an den ersten Joch-Polflächen (11a, 12a) an den beiden Enden des Jochs (10) anliegen,
- und einem Betätigungselement (5) zur Bewegung des Ankers (20) durch eine externe mechanische Kraft (F) aus der ersten Drehstellung (I) in eine zweite Drehstellung (II), wobei in der Induktionsspule (30) elektrische Energie induziert wird,
**dadurch gekennzeichnet, dass** zwei an den beiden Enden des Ankers (20) diagonal gegenüberliegende zweite Anker-Polflächen (21b, 22b) kleiner ausgebildet sind als die ersten Anker-Polflächen (21a, 22a) und/oder zwei an den beiden Enden des Jochs (10) diagonal gegenüberliegende zweite Joch-Polflächen (11b, 12b) kleiner ausgebildet sind als die ersten Joch-Polflächen (11a, 12a), und/oder dass zwischen den zweiten Anker-Polflächen (21 b, 22b) und den diesen zugeordneten zweiten Joch-Polflächen (11 b, 12b) jeweils Trennelemente (13) aus nichtmagnetischem Stoff angeordnet sind, sodass der magnetische Widerstand in der ersten Drehstellung kleiner ist als in der zweiten Drehstellung.

2. Energiewandler nach Anspruch 1, **dadurch gekennzeichnet, dass** der Anker (20) an seinen Enden jeweils zueinander weisende erste und zweite Anker-Polflächen (21 a, 22a, 21 b, 22b) aufweist und das Joch (10) und der Anker (20) so ausgebildet und zueinander angeordnet sind, dass sich die Enden (11, 12) des Jochs (10) an den Enden des Ankers (20) jeweils zwischen der ersten und der zweiten Anker-Polfläche (21a, 22a, 21 b, 22b) befinden,
oder dass das Joch an seinen Enden jeweils zueinander weisende erste und zweite Joch-Polflächen aufweist, und das Joch und der Anker so ausgebildet und zu einander angeordnet sind, dass sich die Enden des Ankers an den Enden des Jochs jeweils zwischen der ersten und der zweiten Joch-Polfläche befinden.

3. Energiewandler nach Anspruch 1 oder 2, **dadurch gekennzeichnet, dass** das Joch (10) in einer Ebene parallel zur Drehachse (D) und parallel zu einer Längsachse (Lₛ) der Induktionsspule (30) einen U-förmigen Querschnitt aufweist.

4. Energiewandler nach einem der Ansprüche 1 bis 3, **dadurch gekennzeichnet, dass** das Joch (10) im Querschnitt senkrecht zu einer Längsachse (Lₛ) der Induktionsspule (30) im Wesentlichen kreisförmig oder zumindest annähernd quadratisch ausgebildet ist.

5. Energiewandler nach einem der Ansprüche 1 bis 4, **dadurch gekennzeichnet, dass** das Joch (10) im Querschnitt senkrecht zu einer Längsachse (Lₛ) der Induktionsspule (30) im Wesentlichen viereckig ausgebildet ist und einem Bereich der Induktionsspule an zwei gegenüberliegenden Seiten mit einer Mantelschicht bedeckt ist, und zwischen der Induktionsspule und den zwei anderen gegenüberliegenden Seiten des Jochs ein Luftspalt verbleibt.

6. Energiewandler nach einem der Ansprüche 1 bis 5, **dadurch gekennzeichnet, dass** der Anker (20) in einer Ebene senkrecht zur Drehachse (D) einen H-förmigen Querschnitt aufweist.

7. Energiewandler nach einem der Ansprüche 1 bis 6, **dadurch gekennzeichnet, dass** der Energiewandler (1) so ausgebildet ist, dass die Magnetflussrichtung durch das Joch (10) bei einer Verstellung des Ankers (20) von der ersten Drehstellung (I) in die zweite Drehstellung (II), in der die zweiten Anker-Polflächen (21 b, 22b) an die zweiten Joch-Polflächen (11 b, 12b) anschlagen, beibehalten wird oder der Magnetfluss in der zweiten Drehstellung (II) Null ist.

8. Energiewandler nach einem der Ansprüche 1 bis 7, **gekennzeichnet durch** eine Rückstellfeder (4), um den Anker (20) von der zweiten Drehstellung (II) in die erste Drehstellung (I) zurückzustellen.

9. Energiewandler nach einem der Ansprüche 1 bis 8, **dadurch gekennzeichnet, dass** das Betätigungselement (5) als manuell bedienbarer Taster oder Schalter ausgebildet ist oder mit einem manuell bedienbaren Taster oder Schalter gekoppelt ist.

10. Energiewandler nach einem der Ansprüche 1 bis 9, **dadurch gekennzeichnet, dass** das Betätigungselement zur automatischen Betätigung mit einem Aktor gekoppelt ist.

## Claims

1. An energy converter (1) for converting kinetic energy into electrical energy having
- a fixed yoke (10), which exhibits at least two ends (11, 12), each having a first yoke pole face (11a, 12a) and a second yoke pole face (11 b, 12b), and has at least one induction coil (30) wound around it in a region between the ends(11, 12),
- a permanent-magnetic armature (20),
which exhibits a first armature pole face (21 a, 22a) and a second armature pole face (21 b, 22b) at each of two ends, so that at each of the ends (11, 12) of the yoke (10), a first armature pole face (21 a, 22a) and a first yoke pole face (11 a, 12a) and also a second armature pole face (21 b, 22b) and a second yoke pole face (11 b, 12b) lie opposite,
and which is rotatably mounted about an axis of rotation (D) on the yoke (10), such that in a first rotational position (I) of the armature (20) the first armature pole faces (21 a, 22a) each abut on both ends of the yoke (10), thereby forming a limit stop for the first rotational position (I) at the first yoke pole faces (11a, 12a) at,
- and an actuating element (5) for moving the armature (20) by an external mechanical force (F) from the first rotational position (I) into a second rotational position (II), whereupon electrical energy is induced in the induction coil (30),
**characterized in that** two diagonally opposite second armature pole faces (21 b, 22b) at the two ends of the armature (20) are smaller in design than the first armature pole faces (21 a, 22a) and/or two diagonally opposite second yoke pole faces (11 b, 12b) at the two ends of the yoke (11 b, 12b) are smaller in design than the first yoke pole faces (11 a, 12a),
and/or that separative elements (13) made of non-magnetic material are arranged between the second armature pole faces (21 b, 22b) and the second yoke pole surfaces (11 b, 12b) attributed thereto, so that the magnetic resistance in the first rotational position is smaller than in the second rotational position.

2. The energy converter according to claim 1, **characterized in that** the armature (20) exhibits first and second armature pole faces (21 a, 22a, 21 b, 22b) facing one another at each of its ends and the yoke (10) and the armature (20) are configured and arranged relative to one another, such that the ends (11, 12) of the yoke (10) are located at the ends of the armature (20) between the first and the second armature pole face (21 a, 22a, 21 b, 22b) in each case,
or that the yoke exhibits first and second yoke pole faces facing one at each of its ends and the yoke and the armature are configured and arranged relative to one another, such that the ends of the armature are located at the ends of the yoke between the first and second yoke pole face in each case.

3. The energy converter according to claim 1 or 2, **characterized in that** the yoke (10) exhibits a U-shaped cross-section in a plane parallel to the axis of rotation (D) and parallel to a longitudinal axis (Lₛ) of the induction coil (30).

4. The energy converter according to one of the claims 1 to 3, **characterized in that** the yoke (10) is configured in substantially circular form or at least approximately quadratically in the cross-section perpendicular to a longitudinal axis (Lₛ) of the induction coil (30).

5. The energy converter according to one of the claims 1 to 4, **characterized in that** the yoke (10) is configured substantially square in form in the cross-section perpendicular to a longitudinal axis (Lₛ) of the induction coil (30) and a region of the induction coil is covered with an outer coating at two opposite ends and an air gap remains between the induction coil and the two other opposite sides of the yoke .

6. The energy converter according to one of the claims 1 to 5, **characterized in that** the armature (20) exhibits an H-shaped cross-section in a plane perpendicular to the axis of rotation (D).

7. The energy converter according to one of the claims 1 to 6, **characterized in that** the energy converter (1) is configured such that the magnetic flow direction through the yoke (10) is retained when the armature (20) is shifted from the first rotational position (I) into the second rotational position (II), in which the second armature pole faces (21 b, 22b) strike against the second yoke pole faces (11 b, 12b), or the magnetic flow in the second rotational position (II) is zero.

8. The energy converter according to one of the claims 1 to 7, **characterized by** a return spring (4) for restoring the armature (20) from the second rotational position (II) into the first rotational position (I).

9. The energy converter according to one of the claims 1 to 8, **characterized in that** the actuating element (5) is configured as a manually operable push-button or switch or is connected to a manually operable push-button or switch.

10. The energy converter according to one of the claims 1 to 9, **characterized in that** the actuating element is connected for automatic actuation to an actuator.

## Revendications

1. Convertisseur d'énergie (1) pour convertir de l'énergie cinétique en énergie électrique avec
- une culasse fixe (10), laquelle présente au moins deux extrémités (11, 12) avec respectivement une première face polaire de culasse (11a, 12a) et une deuxième face polaire de culasse (11 b, 12b) et laquelle est enveloppée dans une zone entre les extrémités (11, 12) par au moins une bobine d'induction (30),
- une armature à aimants permanents (20),
laquelle présente à deux extrémités respectivement une première face polaire d'armature (21 a, 22a) et une deuxième face polaire d'armature (21 b, 22b), de sorte qu'à chacune des extrémités (11, 12) de la culasse (10) respectivement une première face polaire d'armature (21 a, 22a) et une première face polaire de culasse (11 a, 12a) ainsi qu'une deuxième face polaire d'armature (21 b, 22b) et une deuxième face polaire de culasse (11 b, 12b) soient situées en vis-à-vis,
et laquelle est logée de manière rotative autour d'un axe de rotation (D) sur la culasse (10) de manière à ce que dans une première position de rotation (I) de l'armature (20), les premières faces polaires d'armature (21 a, 22a) reposent respectivement contre les deux extrémités de la culasse (10) en formant une butée pour la première position de rotation (I) sur les premières faces polaires de culasse (11a, 12a),
- et un élément d'actionnement (5) pour le déplacement de l'armature (20) grâce à une force mécanique externe (F) de la première position de rotation (I) à la deuxième position de rotation (II), moyennant quoi de l'énergie électrique est induite dans la bobine d'induction (30),
**caractérisé en ce que** deux deuxièmes faces polaires d'armature (21 b, 22b) situées diagonalement en vis-à-vis aux deux extrémités de l'armature (20) sont configurées avec des dimensions plus petites que les premières faces polaires d'armature (21 a, 22a) et/ou en ce que deux deuxièmes faces polaires de culasse (11 b, 12b) situées diagonalement en vis-à-vis aux deux extrémités de la culasse (10) sont configurées avec des dimensions plus petites que les premières faces polaires de culasse (11a, 12a), et/ou **en ce que** des éléments de séparation (13) en une substance non magnétique sont respectivement disposés entre les deuxièmes faces polaires d'armature (21 b, 22b) et les deuxièmes faces polaires de culasse (11 b, 12b) associées à celles-ci de manière à ce que la résistance magnétique soit plus faible dans la première position de rotation que dans la deuxième position de rotation.

2. Convertisseur d'énergie selon la revendication 1, **caractérisé en ce que** l'armature (20) présente sur ses extrémités respectivement des premières et deuxièmes faces polaires d'armature (21 a, 22a, 21 b, 22b) orientées les unes vers les autres et **en ce que** la culasse (10) et l'armature (20) sont réalisées et disposées l'un par rapport à l'autre de manière à ce que les extrémités (11, 12) de la culasse (10) se trouvent aux extrémités de l'armature (20) respectivement entre la première et la deuxième face polaire d'armature (21 a, 22a, 21 b, 22b), ou bien **en ce que** la culasse présente sur ses extrémités respectivement des premières et deuxièmes faces polaires de culasse orientées les unes vers les autres, et **en ce que** la culasse et l'armature sont réalisées et disposées l'un par rapport à l'autre de manière à ce que les extrémités de l'armature se trouvent aux extrémités de la culasse respectivement entre la première et la deuxième face polaire de culasse.

3. Convertisseur d'énergie selon la revendication 1 ou 2, **caractérisé en ce que** la culasse (10) présente, dans un plan parallèle à l'axe de rotation (D) et parallèle à un axe longitudinal (Lₛ) de la bobine d'induction (30), une coupe transversale en forme de U.

4. Convertisseur d'énergie selon l'une des revendications 1 à 3, **caractérisé en ce que** la culasse (10) est réalisée, en coupe transversale perpendiculairement à un axe longitudinal (Lₛ) de la bobine d'induction (30), de manière essentiellement circulaire ou au moins à peu près carrée.

5. Convertisseur d'énergie selon l'une des revendications 1 à 4, **caractérisé en ce que** la culasse (10) est réalisée, en coupe transversale perpendiculairement à un axe longitudinal (Lₛ) de la bobine d'induction (30), de manière essentiellement carrée et **en ce qu'**elle est recouverte d'une couche de revêtement dans une zone de la bobine d'induction sur deux côtés situés en vis-à-vis, et **en ce qu'**un entrefer subsiste entre la bobine d'induction et les deux autres côtés de la culasse situés en vis-à-vis.

6. Convertisseur d'énergie selon l'une des revendications 1 à 5, **caractérisé en ce que** l'armature (20) présente, dans un plan perpendiculairement à l'axe de rotation (D), une coupe transversale en forme de H.

7. Convertisseur d'énergie selon l'une des revendications 1 à 6, **caractérisé en ce que** le convertisseur d'énergie (1) est réalisé de manière à ce que le sens d'écoulement du flux magnétique à travers la culasse (10) est conservé en cas de changement de position de l'armature (20) pour passer de la première position de rotation (I) à la deuxième position de rotation (II) dans laquelle les deuxièmes faces polaires d'armature (21 b, 22b) butent contre les deuxièmes faces polaires de culasse (11 b, 12b) ou **en ce que** le flux magnétique est nul dans la deuxième position de rotation (II).

8. Convertisseur d'énergie selon l'une des revendications 1 à 7, **caractérisé par** un ressort de rappel (4) afin de refaire passer l'armature (20) de la deuxième position de rotation (II) à la première position de rotation (I).

9. Convertisseur d'énergie selon l'une des revendications 1 à 8, **caractérisé en ce que** l'élément d'actionnement (5) est réalisé en tant que touche ou interrupteur à commande manuelle ou bien est couplé avec une touche ou un interrupteur à commande manuelle.

10. Convertisseur d'énergie selon l'une des revendications 1 à 9, **caractérisé en ce que** l'élément d'actionnement est couplé avec un actionneur pour l'actionnement automatique.
